# EUROPÄISCHE PATENTSCHRIFT

(11) **EP 1 300 264 B1**
(45) Veröffentlichungstag und Bekanntmachung des Hinweises auf die Patenterteilung: **19.04.2006**
(21) Anmeldenummer: 02022068.7
(22) Anmeldetag: 02.10.2002
(51) Int. Cl.: B60G 11/28, F16F 9/05

(54) **Luftfeder für eine Fahrzeugachsaufhängung**
Airspring for a vehicle axle suspension
Ressort pneumatique pour une suspension d'essieu de véhicule

(30) Priorität: 05.10.2001 DE 10149057
(43) Veröffentlichungstag der Anmeldung: 09.04.2003
(73) Patentinhaber: BPW Bergische Achsen Kommanditgesellschaft, 51674 Wiehl (DE)
(72) Erfinder: Ebert, Jörg, Dr. Dipl.-Ing., 50850 Köln (DE)
(74) Vertreter: Christophersen, Ruth

(56) Entgegenhaltungen:
- EP-A- 0 160 371
- EP-A- 0 914 976
- US-A- 5 954 316

## Beschreibung

Die Erfindung betrifft eine Luftfeder für Luftfederachsen mit einem an einem Fahrzeugrahmen festlegbaren Deckel, einem auf einem rückwärtigen Ende eines Längslenkers festlegbaren, in Eintauchrichtung betrachtet mehrteilig ausgebildeten Tauchkolben sowie einem zwischen Deckel und Tauchkolben angeordneten Rollbalg.

Eine Luftfeder mit diesen Merkmalen ist beispielsweise aus der DE 31 47 231 C1 bekannt. Zum Festlegen auf dem rückwärtigen Ende eines Längsträgers ist der Tauchkolben längslenkerseitig mit einer Bodenplatte verschlossen, welche einerseits beispielsweise durch Verschrauben mit dem Längslenker verbunden ist und andererseits ebenfalls beispielsweise durch Verschrauben mit dem Tauchkolben verbunden ist. Nachteilig bei dieser Ausführungsform eines Tauchkolbens mit Bodenplatte ist, dass eine Mindestdicke der Scheibe erforderlich ist, um im Bereich des Kraftflusses um die Anlenkpunkte und Kontaktflächen mit dem Längslenker die ausreichende Festigkeit und Stabilität der Bodenplatte und somit des gesamten Tauchkolbens zu gewährleisten. Dies bedeutet die Anordnung einer großen Masse im Bereich der ungefederten Massen des Achsaggregats.

Eine einfach aufgebaute und mit weniger Masse behaftete Luftfeder ist aus der EP 0 864 453 A1 bekannt. Bei dieser Luftfeder ist der Tauchkolben nach unten offen ausgebildet direkt auf dem Längslenker festlegbar, so dass auf die bekannte massive Bodenplatte verzichtet werden kann. Diese, eine deutliche Reduzierung der ungefederten Massen des Achsaggregats bildende Ausgestaltung des Tauchkolbens einer Luftfeder hat sich in der Praxis bewährt.

Eine gattungsgemäße Luftfeder für Luftfederachsen ist ferner aus der EP 0 914 976 A1 bekannt. Der hierbei verwendete Tauchkolben ist zweiteilig und besteht aus einem im Wesentlichen glockenförmigen Tauchkolbengrundkörper, einschließlich eines zentral darin angeordneten Stützelements, sowie einer separaten Scheibe, welche von unten her in die Öffnung des Tauchkolbengrundkörpers eingesetzt ist. Die Scheibe ist in der Weise abgedichtet in den Tauchkolbengrundkörper eingesetzt, dass das Innere des Tauchkolbens selbst als Federvolumen mitwirken kann. Zu diesem Zweck befinden sich auf der Oberseite des Tauchkolbens Überströmöffnungen, über die das Innere des Tauchkolbens mit dem übrigen Federvolumen der Luftfeder verbunden ist. Ohne die von unten her in den Tauchkolbenkörper eingesetzte Scheibe würde diese Luftfeder daher nicht funktionieren.

Nachteilig bei den aus der Praxis bekannten Luftfedern ist, dass eine ständige kostenintensive Bevorratung unterschiedlicher Größen von Tauchkolben erforderlich ist.

Der Erfindung liegt die Aufgabe zugrunde, eine Luftfeder für Luftfederachsen zu schaffen, die einfach aufgebaut und zur Anpassung an unterschiedliche Bauhöhen des Tauchkolbens und somit unterschiedliche Federwege der Luftfeder flexibel einsetzbar ist.

Die technische Lösung dieser Aufgabenstellung ist dadurch gekennzeichnet, dass der Tauchkolben zur Einstellung seiner Bauhöhe modular aus einzelnen, axial aufeinander aufsetzbaren Teilen aufgebaut ist, wobei die einzelnen Teile Tauchkolbensegmente sind.

Durch die erfindungsgemäße mehrteilige Ausbildung des Tauchkolbens besteht erstmalig die Möglichkeit, durch axiales Ansetzen einzelner zusätzlicher Teile an den Tauchkolben oder durch Entfemen einzelner Bauteile des Tauchkolbens die Höhe des Tauchkolbens und somit den Federweg ohne Austausch des kompletten Tauchkolbens zu variieren. Aufgrund dieser Modulbauweise des erfindungsgemäßen Tauchkolbens wird auch die Bevorratung von Austauschteilen auf ein Minimum reduziert, da es zur Einstellung unterschiedlicher wirksamer Längen des Tauchkolbens nur des Hinzufügens bzw. Abtrennens einzelner Tauchkolbensegmente bedarf.

Gemäß einer praktischen Ausführungsform der Erfindung sind die einzelnen Teile des Tauchkolbens zumindest formschlüssig miteinander verbindbar, um einen sicheren Halt der einzelnen Bauteile aufeinander zu erzielen und sicherzustellen, dass der Rollbalg gleichmäßig entlang der äußeren Mantelfläche eines solchermaßen aufgebauten Tauchkolbens abrollen kann.

Das gegenseitige Positionieren und lagegenaue Zusammenfügen der einzelnen Teile des Tauchkolbens kann dadurch erleichtert werden, dass Führungselemente an der Ober-und/oder Unterseite der einzelnen Teile des Tauchkolbens ausgebildet sind.

Zur Übertragung der Stützkräfte auf den Längslenker bei vollständig entlüfteter Luftfeder ist in jedem der einzelnen Teile des Tauchkolbens ein in Eintauchrichtung des Tauchkolbens verlaufender Stützkörper derart angeordnet, dass die

Stützkörper der einzelnen Teile des Tauchkolbens im montierten Zustand einen durchgehenden Stützkörper bildend fluchtend aneinander liegen, so daß die Stützkräfte direkt in den Längslenker eingeleitet werden.

Bei einer ersten Ausführungsform der Erfindung weisen die Stützkörper der einzelnen Teile des Tauchkolbens eingearbeitete Rohrstücke, z. B. aus Metall, auf.

Gemäß einer weiteren Ausführungsform der Erfindung nehmen die Stützkörper nur ein einschiebbares, durchgehendes Rohr auf, um so Axialkräfte weiterzugeben.

Um einen Tauchkolben zu schaffen, der bei einem geringen Eigengewicht und hoher Korrosionsbeständigkeit gute Festigkeits- und Stabilitätseigenschaften aufweist, wird mit der Erfindung weiterhin vorgeschlagen, daß die einzelnen Teile des Tauchkolbens aus Kunststoff, insbesondere glasfaserverstärktem Kunststoff, bestehen.

Zur Aufnahme der Befestigungsmittel zum Festlegen des Tauchkolbens am Längslenker ist gemäß einer bevorzugten Ausführungsform der Erfindung der Tauchkolben über eine Halteplatte am Längslenker festlegbar, wozu in der Unterseite jedes der einzelnen Teile des Tauchkolbens eine der Form der Halteplatte entsprechende Ausnehmung ausgebildet ist. Damit die mit dieser Ausnehmung versehenen Teile zu einem formschlüssigen und stabilen Tauchkolben zusammensetzbar sind, sind auf der Oberseite aller nicht direkt mit dem Rollbalg verbundenen Teile des Tauchkolbens im wesentlichen der Form der Halteplatte entsprechende Vorsprünge ausgebildet sind, die im zusammengesetzten Zustand in die entsprechenden Ausnehmungen in der Unterseite der anderen Teile des Tauchkolbens eingreifen und so eine gegenseitige Lagefixierung bewirken.

Damit sichergestellt ist, daß die einzelnen Bauteile des Tauchkolbens immer in der richtigen Position zueinander angeordnet werden, sind die Ausnehmungen zur Aufnahme der Halteplatte sowie der Vorsprünge so in den Unterseiten der einzelnen Teile des Tauchkolbens ausgebildet sind, daß die einzelnen Teile des Tauchkolbens in nur einer Position aufeinander bzw. auf die Halteplatte aufsetzbar sind.

Weiterhin wird mit der Erfindung vorgeschlagen, daß die einzelnen Teile des Tauchkolbens über ein Spannelement miteinander verbindbar sind. Dieses Spannelement kann gemäß vorteilhafter Ausgestaltungen der Erfindung gleichzeitig dazu verwendet werden, um den Tauchkolben am Rollbalg festzulegen und/oder die Halteplatte am Tauchkolben festzulegen.

Schließlich wird mit der Erfindung vorgeschlagen, daß die einzelnen Teile des Tauchkolbens ein im Querschnitt festigkeitsoptimiertes Profil mit einer kreisförmigen Mantelfläche einem zentralen Stützkörper aufweisen, wobei der Stützkörper und die Mantelfläche über im wesentlichen radial verlaufende Stege miteinander verbunden sind.

Weitere Einzelheiten und Vorteile der Erfindung ergeben sich aus der nachfolgenden Beschreibung der zugehörigen Zeichnung, in der eine Ausführungsform einer erfindungsgemäß ausgebildeten Luftfeder nur beispielhaft schematisch dargestellt ist. In der Zeichnung zeigt:
- Fig. 1: eine Prinzipskizze einer Luftfederachse in teilweise eingefederter Lage;
- Fig. 2a: eine Explosionszeichnung einer erfindungsgemäßen Luftfeder im Längsschnitt;
- Fig. 2b: einen Längsschnitt durch die zusammengesetzte Luftfeder gemäß Fig. 2a;
- Fig. 3a: eine Draufsicht auf ein Bauteil des Tauchkolbens;
- Fig. 3b: eine Seitenansicht des Bauteils gemäß Fig. 3a und
- Fig. 3c: eine Ansicht von unten des Bauteils gemäß Fig. 3a und 3b.

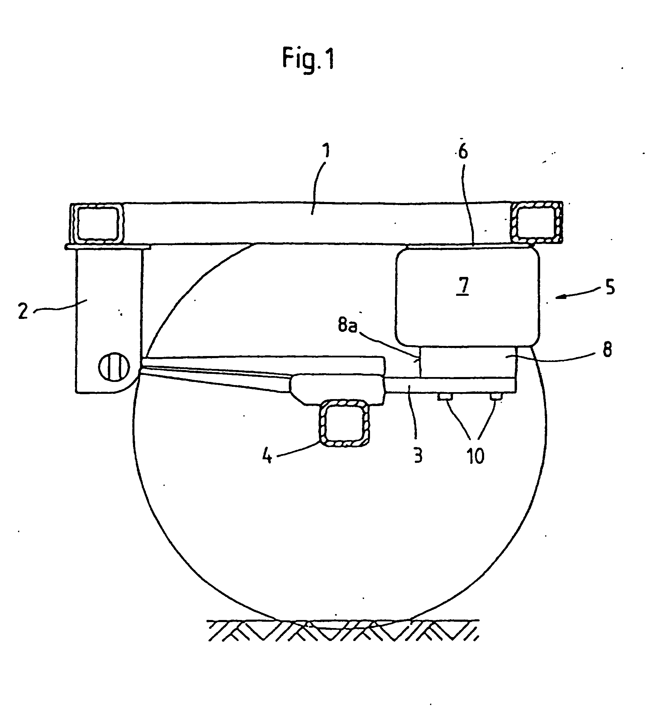

Bei der in Fig. 1 dargestellten Luftfederachse ist zwischen einem Teil eines Fahrzeugrahmens 1 und einem über eine Konsole 2 schwenkbar angelenkten Längslenker 3 für einen Achskörper 4 eine Luftfeder 5 eingebaut.

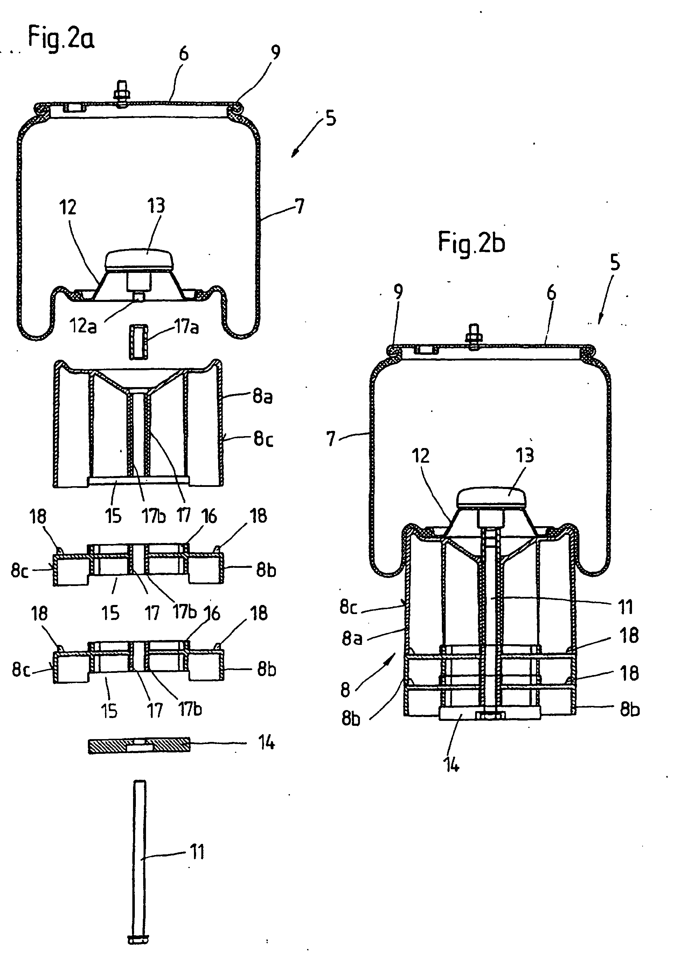

Die Luftfeder 5 besteht im Prinzip aus einem am Fahrzeugrahmen 1 befestigten Deckel 6, einem Rollbalg 7 und einem am Längslenker 3 festgelegten Tauchkolben 8. Deckelseitig ist der Rollbalg 7 beispielsweise über einen Sprengring 9 (siehe Fig. 2a und 2b) lösbar am Deckel 6 befestigt. Der Tauchkolben 8 mit seiner als Abrollfläche für den Rollbalg 7 dienenden zylindrischen Mantelfläche 8a ist über Befestigungsmittel 10 am rückwärtigen Ende des Längslenkers 3 befestigt.

Der Aufbau der Luftfeder 5 ist insbesondere den Darstellungen in den Abbildungen Fig. 2a und 2b zu entnehmen.

Kennzeichnend für die dargestellte Luftfeder 5 ist der in Eintauchrichtung mehrteilige Aufbau des Tauchkolbens 8 aus mehreren einzelnen Teilen 8a und 8b, wobei nur das Teil 8a am Rollbalg 7 festlegbar ist und die jeweils identisch ausgebildeten Teile 8b dazu dienen, unterschiedliche Bauhöhen des Tauchkolbens 8 und somit unterschiedliche Federwege zu ermöglichen, ohne den gesamten Tauchkolben 8 ausbauen und gegen einen anderen Tauchkolben 8 ersetzen zu müssen.

Das Festlegen des Tauchkolbens 8 am Rollbalg 7 erfolgt bei der dargestellten Ausführungsform über ein alle Teile 8a und 8b des Tauchkolbens 8 axial miteinander verbindendes Spannelement 11, welches in diesem Fall als rollbalgseitig mit einem Außengewinde versehene Schraube ausgebildet ist, die in eine Gewindehülse 17a einschraubbar ist, welche wiederum auf einen Gewindestift 12a aufschraubbar ist. Der Gewindestift 12a ist durch eine Abschlußkappe 12 hindurchgeführt und mit einem Puffer 13 aus vorzugsweise Gummi verbunden, so daß beim Verschrauben des Spannelementes 11 die Abschlußkappe gegen den Tauchkolben 8 gezogen wird. Beim maximalen Einfedern des Tauchkolbens 8 bzw. beim Anschlagen des Puffers 13 unter den Deckel 6 wird die Stoßkraft vom Puffer 13 direkt über die Gewindehülse 17a und einen Stützkörper 17 des Tauchkolbens auf eine Halteplatte 14 übertragen. Die Halteplatte 14 ist zur Aufnahme der Befestigungsmittel 10 zum Festlegen des Tauchkolbens 8 am Längslenker 3 in die Unterseite des längslenkerseitig unteren Teils 8b des Tauchkolbens 8 eingesetzt. Hierzu ist in der Unterseite des Teils 8b des Tauchkolbens 8 eine der Form der Halteplatte 14 entsprechende Ausnehmung 15 ausgebildet.

Um die einzelnen Teile 8b des Tauchkolbens 8 formschlüssig und lagegenau aufeinandersetzen zu können, sind auf der Oberseite aller nicht direkt mit dem Rollbalg 7 verbundenen Teile 8b des Tauchkolbens 8 im wesentlichen der Kontur der Halteplatte 14 entsprechende Vorsprünge 16 ausgebildet sind, die im zusammengesetzten Zustand in entsprechende Ausnehmungen 15 in der Unterseite der jeweils oberhalb angeordneten Teile 8b und 8a des Tauchkolbens 8 eingreifen.

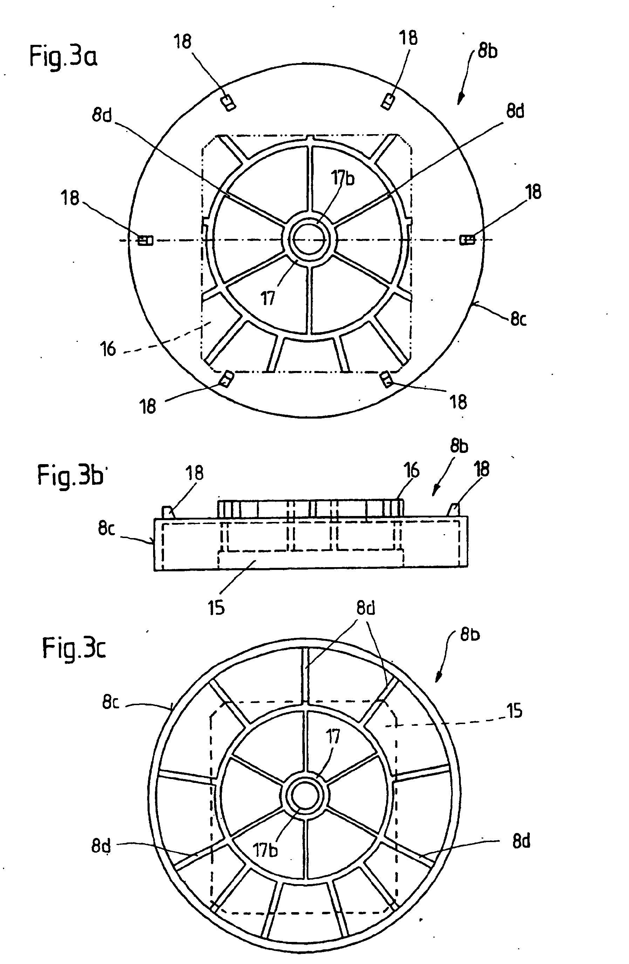

Wie aus einer Zusammenschau der Abbildungen Fig. 2a bis 3c ersichtlich, weist der beispielsweise als Spritzgußteil aus Kunststoff gefertigte Tauchkolben 8 eine kreisförmige Mantelfläche 8c auf, von der aus sich eine Vielzahl von im wesentlichen radial verlaufenden Stegen 8d zur Mitte des Tauchkolbens 8 hin erstrecken. Zur Aufnahme der Gewichts- und Stützkräfte bei entlüfteter Luftfeder 5 weist der Tauchkolben 8 den zentralen Stützkörper 17 auf, der im dargestellten Ausführungsbeispiel je ein in die einzelnen Teile 8a, 8b einsetzbares Rohrstück 17b beinhalten. Diese Rohrstücke 17b der einzelnen Teile 8a und 8b des Tauchkolbens 8 sind dabei so angeordnet, daß sie, wie aus Fig. 2b ersichtlich, im montierten Zustand den Stützkörper 17 mitbilden. Bei der dargestellten Ausführungsform des Tauchkolbens 8 stützt sich der Stützkörper 17 unmittelbar auf der Halteplatte 14 ab.

Damit sichergestellt ist, daß die einzelnen Teile 8a und 8b des Tauchkolbens 8 immer in der richtigen Position zueinander angeordnet werden, sind die Ausnehmungen 15 zur Aufnahme der Halteplatte 14 sowie der Vorsprünge 16 exzentrisch so in den Unterseiten der einzelnen Teile 8b und 8a des Tauchkolbens 8 ausgebildet, daß die einzelnen Teile 8a und 8b des Tauchkolbens 8 in nur einer Position aufeinander bzw. auf die Halteplatte 14 aufsetzbar sind.

Die positionsgenaue formschlüssige Ausrichtung der einzelnen Teile 8b des Tauchkolbens 8 zueinander kann weiterhin dadurch erleichtert werden, daß, wie insbesondere aus Fig. 2a und 2b ersichtlich, auf der Oberseite der Teile 8b des Tauchkolbens 8 Führungselemente 18 ausgebildet sind, die im zusammengesetzten Zustand an der Innenseite des jeweils anderen Teils 8a oder 8b des Tauchkolbens 8 zentrierend anliegen.

Abweichend von dem auf der Zeichnung dargestellten Ausführungsbeispiel ist es zur Realisierung des Stützkörpers 17 auch denkbar, anstelle der einzelnen Rohrstücke 17b ein durchgehend ausgebildetes Rohrstück vorzusehen. Vorzugsweise handelt es sich in diesem Fall um ein in den Tauchkolben einkippbares Rohrstück, dessen unteres Ende auf der Halteplatte 14 aufliegt, und dessen oberes Ende mit dem Gewindestift 12a verschraubt ist.

Die voranstehend beschriebene Luftfeder 5 zeichnet sich dadurch aus, daß es aufgrund des modularen Aufbaus des Tauchkolbens 8 aus mehreren Teilen 8a und 8b sehr einfach und schnell möglich ist, den Tauchkolben 8 durch Hinzufügen oder Abtrennen einzelner Teile 8b auf unterschiedliche Federwege einzustellen, ohne den kompletten Tauchkolben 8 austauschen zu müssen. Auch für die Lagerhaltung ist diese Ausgestaltung vorteilhaft, da auf die Bevorratung von Tauchkolben 8 unterschiedlichster Bauhöhe verzichtet werden kann.

### Bezugszeichenliste

- 1: Fahrzeugrahmen
- 2: Konsole
- 3: Längslenker
- 4: Achskörper
- 5: Luftfeder
- 6: Deckel
- 7: Rollbalg
- 8: Tauchkolben
- 8a: Teil
- 8b: Teil
- 8c: Mantelfläche
- 8d: Steg
- 9: Sprengring
- 10: Befestigungsmittel
- 11: Spannelement
- 12: Abschlußkappe
- 12a: Gewindestift
- 13.: Puffer
- 14: Halteplatte
- 15: Ausnehmung
- 16: Vorsprung
- 17: Stützkörper
- 17a: Gewindehülse
- 17b: Rohrstück
- 18: Führungselement

## Patentansprüche

1. Luftfeder für Luftfederachsen mit einem an einem Fahrzeugrahmen festlegbaren Deckel (6), einem auf einem rückwärtigen Ende eines Längslenkers (3) festlegbaren, in Eintauchrichtung betrachtet mehrteilig ausgebildeten Tauchkolben (8) sowie einem zwischen Deckel (6) und Tauchkolben (8) angeordneten Rollbalg (7),
**dadurch gekennzeichnet,**
**dass** der Tauchkolben (8) zur Einstellung seiner Bauhöhe modular aus einzelnen, axial aufeinander aufsetzbaren Teilen (8 a, 8 b) aufgebaut ist, wobei die einzelnen Teile (8 a, 8 b) Tauchkolbensegmente sind.

2. Luftfeder nach Anspruch 1, **dadurch gekennzeichnet, daß** die einzelnen Teile (8a, 8b) des Tauchkolbens (8) zumindest formschlüssig miteinander verbindbar sind.

3. Luftfeder nach Anspruch 1 oder 2, **dadurch gekennzeichnet, daß** zum Ausrichten und lagegenauen Positionieren der einzelnen Teile (8b) des Tauchkolbens (8) zueinander Führungselemente (18) an der Ober- und/oder Unterseite der einzelnen Teile (8b) des Tauchkolbens (8) ausgebildet sind.

4. Luftfeder nach mindestens einem der Ansprüche 1 bis 3, **dadurch gekennzeichnet, daß** in jedem der einzelnen Teile (8a, 8b) des Tauchkolbens (8) einin Eintauchrichtung des Tauchkolbens (8) verlaufender Stützkörper (17) derart angeordnet ist, daß die Stützkörper (17) der einzelnen Teile (8a, 8b) des Tauchkolbens (8) im montierten Zustand einen durchgehenden Stützkörper (17) bildend fluchtend aneinander liegen.

5. Luftfeder nach Anspruch 4, **dadurch gekennzeichnet, daß** die Stützkörper (17) der einzelnen Teile (8a, 8b) des Tauchkolbens (8) eingearbeitete Rohrstücke (17b), z. B. aus Metall, aufweisen.

6. Luftfeder nach Anspruch 4, **dadurch gekennzeichnet, daß** die Stützkörper (17) nur ein einschiebbares, durchgehendes Rohr aufnehmen.

7. Luftfeder nach mindestens einem der Ansprüche 1 bis 6, **dadurch gekennzeichnet, daß** die einzelnen Teile (8a, 8b) des Tauchkolbens (8) aus Kunststoff, insbesondere glasfaserverstärktem Kunststoff, bestehen.

8. Luftfeder nach mindestens einem der Ansprüche 1 bis 7, **dadurch gekennzeichnet, daß** der Tauchkolben (8) über eine Halteplatte (14) am Längslenker (3) festlegbar ist, wobei in der Unterseite jedes der einzelnen Teile (8a, 8b) des Tauchkolbens (8) eine der Form der Halteplatte (14) entsprechende Ausnehmung (15) ausgebildet ist.

9. Luftfeder nach Anspruch 8 in Verbindung mit einem der Ansprüch 4 bis 6 **dadurch gekennzeichnet, daß** sich der Stützkörper (17) des Tauchkolbens (8) mit seinem unteren Ende direkt auf der Halteplatte (14) abstützt.

10. Luftfeder nach Anspruch 8, **dadurch gekennzeichnet, daß** auf der Oberseite aller nicht direkt mit dem Rollbalg (7) verbundenen Teile (8b) des Tauchkolbens (8) im wesentlichen der Form der Halteplatte (14) entsprechende Vorsprünge (16) ausgebildet sind, die im zusammengesetzten Zustand in die entsprechenden Ausnehmungen (15) in der Unterseite der anderen Teile (8a, 8b) des Tauchkolbens (8) eingreifen.

11. Luftfeder nach Anspruch 9 oder 10, **dadurch gekennzeichnet, daß** die Ausnehmungen (15) zur Aufnahme der Halteplatte (14) sowie der Vorsprünge (16) so in den Unterseiten der einzelnen Teile (8a, 8b) des Tauchkolbens (8) ausgebildet sind, daß die einzelnen Teile (8a, 8b) des Tauchkolbens (8) in nur einer Position aufeinander bzw. auf die Halteplatte (14) aufsetzbar sind.

12. Luftfeder nach mindestens einem der Ansprüche 1 bis 11, **dadurch gekennzeichnet, daß** die einzelnen Teile (8a, 8b) des Tauchkolbens (8) über ein Spannelement (11) miteinander verbindbar sind.

13. Luftfeder nach Anspruch 12,**dadurch gekennzeichnet, daß** der Tauchkolben (8) gleichzeitig über das Spannelement (11) am Rollbalg (7) festlegbar ist.

14. Luftfeder nach Anspruch 12 oder 13 in Verbindung mit Anspruch 8, **dadurch gekennzeichnet, daß** die Halteplatte (14) gleichzeitig über das Spannelement (11) am Tauchkolben (8) festlegbar ist.

15. Luftfeder nach mindestens einem der Ansprüche 1 bis 11, **dadurch gekennzeichnet, daß** die einzelnen Teile (8a, 8b) des Tauchkolbens (8) ein im Querschnitt festigkeitsoptimiertes Profil mit einer kreisförmigen Mantelfläche einem zentralen Stützkörper (17) aufweisen, wobei der Stützkörper (17) und die Mantelfläche (8c) über im wesentlichen radial verlaufende Stege (8d) miteinander verbunden sind.

## Claims

1. Air spring for air spring axles, with a cover (6) which can be fixed to a vehicle frame, a plunger (8) which is of multi-part design when viewed in the plunging direction and can be fixed to a rear end of a longitudinal rod (3), and a bellows (7) arranged between the cover (6) and the plunger (8), **characterized in that** the plunger (8), for adjustment of its height, is designed in a modular manner from individual parts (8a, 8b) which can be placed axially on top of one another, wherein the individual parts (8a, 8b) are plunger segments.

2. Air spring according to Claim 1, **characterized in that** the individual parts (8a, 8b) of the plunger (8) can be connected to one another at least in a form-fitting manner.

3. Air spring according to Claim 1 or 2, **characterized in that**, for the alignment and accurate positioning of the individual parts (8b) of the plunger (8) with respect to one another, guide elements (18) are formed on the upper and/or lower side of the individual parts (8b) of the plunger (8).

4. Air spring according to at least one of Claims 1 to 3, **characterized in that** a support body (17) which runs in the plunging direction of the plunger (8) is arranged in each of the individual parts (8a, 8b) of the plunger (8) in such a way that the support bodies (17) of the individual parts (8a, 8b) are aligned with one another in the assembled state so as to form a continuous support body (17).

5. Air spring according to Claim 4, **characterized in that** the support bodies (17) of the individual parts (8a, 8b) of the plunger (8) comprise incorporated tubular pieces (17b) made, for example, from metal.

6. Air spring according to Claim 4, **characterized in that** the support bodies (17) receive just one continuous tube which can be pushed in.

7. Air spring according to at least one of Claims 1 to 6, **characterized in that** the individual parts (8a, 8b) of the plunger (8) are made of plastic, in particular of glass-fibre-reinforced plastic.

8. Air spring according to at least one of Claims 1 to 7, **characterized in that** the plunger (8) can be fixed to the longitudinal rod (3) via a retaining plate (14), wherein a recess (15) corresponding to the shape of the retaining plate (14) is formed in the lower side of each of the individual parts (8a, 8b) of the plunger (8).

9. Air spring according to Claim 8 in conjunction with one of Claims 4 to 6, **characterized in that** the support body (17) of the plunger (8) is supported with its lower end directly on the retaining plate (14).

10. Air spring according to Claim 8, **characterized in that** protrusions (16) which correspond essentially to the shape of the retaining plate (14) are formed on the upper side of all parts (8b) of the plunger (8) which are not directly connected to the bellows (7), said protrusions engaging in the corresponding recesses (15) in the lower side of the other parts (8a, 8b) of the plunger (8) in the assembled state.

11. Air spring according to Claim 9 or 10, **characterized in that** the recesses (15) for receiving the retaining plate (14) and the protrusions (16) are formed in the lower sides of the individual parts (8a, 8b) of the plunger (8) in such a way that the individual parts (8a, 8b) of the plunger (8) can be placed onto one another or onto the retaining plate (14) in just one position.

12. Air spring according to at least one of Claims 1 to 11, **characterized in that** the individual parts (8a, 8b) of the plunger (8) can be connected to one another via a fixing element (11).

13. Air spring according to Claim 12, **characterized in that** the plunger (8) can at the same time be fixed to the bellows (7) via the fixing element (11).

14. Air spring according to Claim 12 or 13 in conjunction with Claim 8, **characterized in that** the retaining plate (14) can at the same time be fixed to the plunger (8) via the fixing element (11).

15. Air spring according to at least one of Claims 1 to 11, **characterized in that** the individual parts (8a, 8b) of the plunger (8) have a profile which has been optimized for strength in terms of its cross section, with a circular outer surface and a central support body (17), wherein the support body (17) and the outer surface (8c) are connected to one another via webs (8d) which run essentially in the radial direction.

## Revendications

1. Ressort pneumatique pour suspension pneumatique d'essieux comportant un couvercle (6) pouvant être fixé sur un châssis de véhicule, un piston plongeur (8) pouvant être fixé à une extrémité arrière d'un bras oscillant longitudinal (3), et réalisé en plusieurs parties dans la direction d'immersion, ainsi qu'un soufflet roulant (7) disposé entre le couvercle (6) et le piston plongeur (8),
**caractérisé**
**en ce que** pour le réglage de sa hauteur de construction, le piston plongeur (8) est constitué, de manière modulaire, de différentes parties (8a, 8b) pouvant être placées axialement les unes sur les autres, les différentes parties (8a, 8b) étant des segments du piston plongeur,

2. Ressort pneumatique selon la revendication 1, **caractérisé en ce que** les différentes parties (8a, 8b) du piston plongeur (8) peuvent être reliées entre elles au moins par complémentarité de formes.

3. Ressort pneumatique selon la revendication 1 ou 2, **caractérisé en ce que** pour l'orientation et la position précise des différentes parties (8b) du piston plongeur (8) les unes par rapport aux autres, des éléments de guidage (18) sont réalisés sur la face supérieure et/ou la face inférieure des différentes parties (8b) du piston plongeur (8).

4. Ressort pneumatique selon l'une au moins des revendications 1 à 3, **caractérisé en ce que** dans chacune des différentes parties (8a, 8b) du piston plongeur (8) est disposé un corps d'appui (17), s'étendant dans la direction d'immersion du piston plongeur (8), de façon que les corps d'appui (17) des différentes parties (8a, 8b) du piston plongeur (8) à l'état monté s'appliquent de manière alignée les unes contre les autres en formant un corps d'appui (17) continu.

5. Ressort pneumatique selon la revendication 4, **caractérisé en ce que** les corps d'appui (17) des différentes parties (8a, 8b) du piston plongeur (8) comportent des pièces tubulaires (17b) incorporées, par exemple en métal.

6. Ressort pneumatique selon la revendication 4, **caractérisé en ce que** les corps d'appui (17) ne reçoivent qu'un tube continu pouvant être introduit.

7. Ressort pneumatique selon l'une au moins des revendications 1 à 6, **caractérisé en ce que** les différentes parties (8a, 8b) du piston plongeur (8) sont en matière synthétique, en particulier en matière synthétique renforcée par des fibres de verre.

8. Ressort pneumatique selon l'une au moins des revendications 1 à 7, **caractérisé en ce que** le piston plongeur (8) peut être fixé, par une plaque de retenue (14), sur le bras oscillant longitudinal (3), un évidement (15) dont la forme correspond à celle de la plaque de retenue (14) étant réalisé sur la face inférieure de chacune des différentes parties (8a, 8b) du piston plongeur (8).

9. Ressort pneumatique selon la revendication 8, en combinaison avec l'une des revendications 4, 5, 6, **caractérisé en ce que** le corps d'appui (17) du piston plongeur (8) prend appui directement, par son extrémité inférieure, sur la plaque de retenue (14).

10. Ressort pneumatique selon la revendication 8, **caractérisé en ce que** sur la face supérieure de toutes les parties (8b) du piston plongeur (8), non reliées directement au soufflet roulant (7), il est réalisé des saillies (16), correspondant sensiblement à la forme de la plaque de retenue (14), qui, à l'état assemblé, s'engagent dans les évidements (15) correspondants de la face inférieure des autres parties (8a, 8b) du piston plongeur (8).

11. Ressort pneumatique selon la revendication 9 ou 10, **caractérisé en ce que** les évidements (15) sont conçus pour recevoir la plaque de retenue (14) ainsi que les saillies (16) dans les faces inférieures des différentes parties (8a, 8b) du piston plongeur (8), de manière que les différentes parties (8a, 8b) du piston plongeur (8) ne puissent être placées que dans une position l'une sur l'autre ou sur la plaque de retenue (14).

12. Ressort pneumatique selon l'une au moins des revendications 1 à 11, **caractérisé en ce que** les différentes parties (8a, 8b) du piston plongeur (8) peuvent être reliées entre elles par un élément de serrage (11).

13. Ressort pneumatique selon la revendication 12, **caractérisé en ce que** le piston plongeur (8) peut être fixé en même temps sur le soufflet roulant (7), par l'élément de serrage (11).

14. Ressort pneumatique selon la revendication 12 ou 13, en combinaison avec la revendication 8, **caractérisé en ce que** la plaque de retenue (14) peut être fixée en même temps sur le piston plongeur (8), par l'élément de serrage (11).

15. Ressort pneumatique selon l'une au moins des revendications 1 à 11, **caractérisé en ce que** les différentes parties (8a, 8b) du piston plongeur (8) présentent un profil dont la section transversale est optimisée quant à la résistance, avec une surface d'enveloppe de forme circulaire et un corps d'appui central (17), le corps d'appui (17) et la surface d'enveloppe (8c) étant reliés entre eux par des entretoises (8d) s'étendant sensiblement radialement.
